## Europäisches Patentamt
## European Patent Office
## Office européen des brevets

(19)

(11) Publication number: **0 043 915**
**B1**

(12)

# EUROPEAN PATENT SPECIFICATION

(45) Date of publication of patent specification: **12.09.84**

(51) Int. Cl.³: **B 23 K 9/12**

(21) Application number: **81104493.2**

(22) Date of filing: **11.06.81**

(54) **Method for continuously welding a plurality of tubes disposed in multiple rows to a tube sheet.**

| | |
|---|---|
| (30) Priority: **14.07.80 US 167995** | (73) Proprietor: **WESTINGHOUSE ELECTRIC CORPORATION**<br>**Westinghouse Building Gateway Center**<br>**Pittsburgh Pennsylvania 15222 (US)** |
| (43) Date of publication of application:<br>**20.01.82 Bulletin 82/03** | |
| | (72) Inventor: **Monley, Robert E.**<br>**3336 Benden Drive**<br>**Murrysville Pennsylvania (US)** |
| (45) Publication of the grant of the patent:<br>**12.09.84 Bulletin 84/37** | |
| (84) Designated Contracting States:<br>**BE DE FR GB IT SE** | (74) Representative: **Holzer, Rupprecht, Dipl.-Ing.**<br>**Philippine-Welser-Strasse 14**<br>**D-8900 Augsburg (DE)** |
| (56) References cited:<br>**US-A-4 161 646** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of welding tubes to a tube sheet of a heat exchanger and more particularly to a method of continuously welding tubes in a plurality of rows utilizing a continuous weld.

When tubes are individually shielded-gas welded to a tube sheet, for each tube the shielding gas must be turned on to purge the weld area, the arc must be initiated, the weld made and the power to the arc ramped down to prevent cracking in the weld, and the shield gas must be supplied while the weld puddle solidifies. On the other hand, if a continuous weld is made encompassing a plurality of tubes, several of the steps mentioned above need only be performed once for the entire weld cycle thus reducing the overall welding time by a factor in the neighbourhood of 2 to 4. The continuous weld also has the advantage of improving the overall quality of the welds as defects are more apt to occur at the initiation and extinguishing of the arc.

US—A—4161646 discloses the use of a continuous electron beam in a similar application.

An obstruction to continuous welds is that tubes are not disposed on exactly even pitches and the tube sheet holes including the tubes expanded therein do not always have exactly the same size so that it is difficult to position the welding equipment for accurate welding.

It is therefore the principal object of the present invention to provide a method which permits continuous welding of tubes even if the tubes are irregularly spaced and of somewhat irregular size.

With this object in view, the present invention resides in a method for welding at least a portion of multiple rows of tubes to a tube sheet utilizing apparatus which under the control of a recorded program can automatically drive a welding means to any predetermined X and Y position encompassing said portion of said multiple rows of tubes, a continuous weld being formed following a predetermined path which extends about the periphery of each tube having its X and Y positions recorded to weld said tubes to the tube sheet, characterized in that the welding means is a welding torch, and in that before welding, a tapered probe secured to said apparatus is placed into each tube to be welded to the tube sheet and the X and Y positions of each tube are recorded, and that said probe is firmly pressed into the respective tubes so as to be centered therein and that the depth of insertion of said tapered probe into said tubes is also recorded and determined as an indication of the diameter of the tube and the welding path around a tube is modified to compensate for variations in the tubes' predetermined locations and diameters.

The invention will become more readily apparent from the following description of a preferred embodiment thereof shown, by way of example only, the accompanying drawings, in which:

Fig. 1 is a pictorial representation of a tube sheet showing a typical welding pattern for continuously welding a plurality of tubes disposed in a plurality of rows to a tube sheet;

Fig. 2 is a perspective view of apparatus utilized to continuously weld a plurality of tubes in a plurality of rows to a tube sheet;

Fig. 3 shows the orthographic movement of a torch to discrete locations about the center of a tube; and

Fig. 4 through 6 show various continuous weld paths for continuously welding a plurality of tubes in a plurality of rows to a tube sheet.

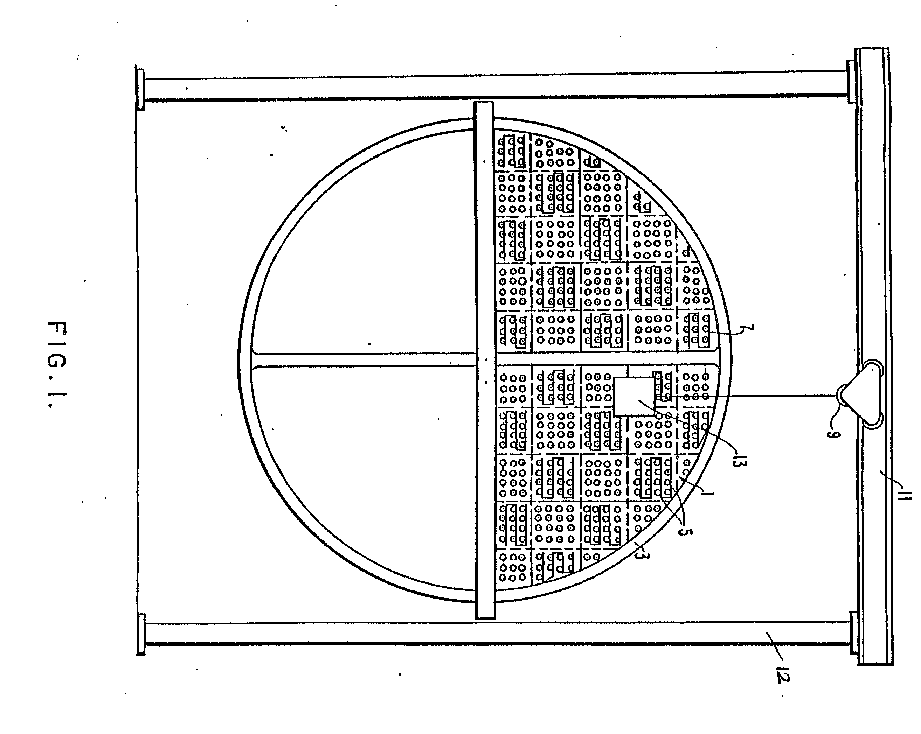

Referring now to the drawings in detail and in particular to Fig. 1 there is shown a tube sheet 1 of a heat exchanger 3 with a plurality of tubes 5 disposed therein in rows and being seal welded to the tube sheet by a continuous weld 7 which encompasses a plurality of tubes in a plurality of rows. A hoist 9 is disposed above the heat exchanger and rolls on a beam 11 supported by the columns 12. The hoist 9 supports continuous welding apparatus 13 for continuously welding a portion of a plurality of rows of tubes.

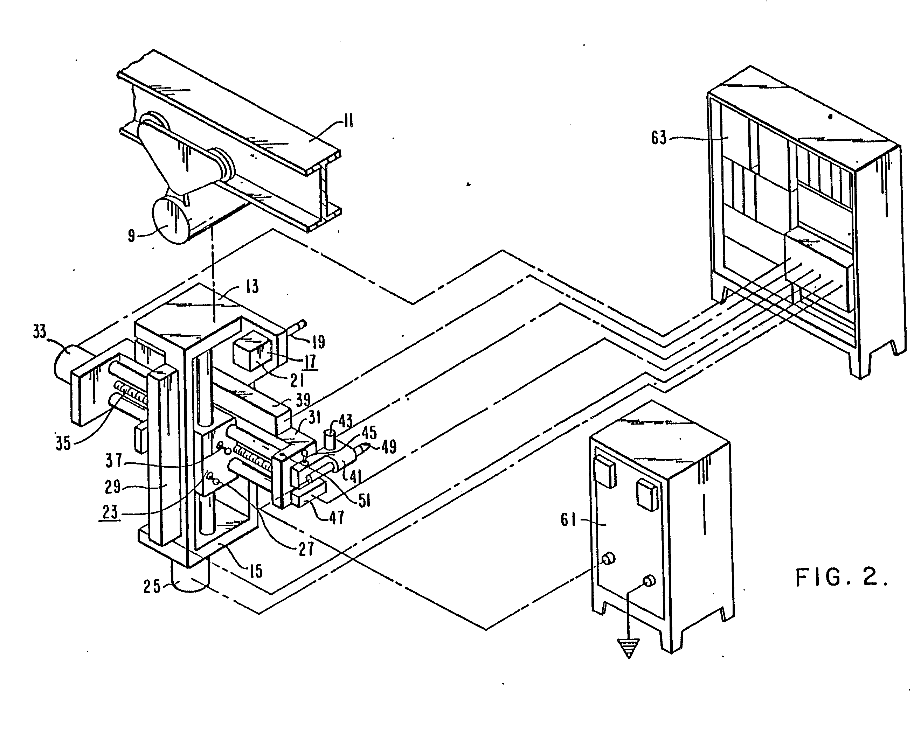

As shown in Figure 2 the continuous welding apparatus 13 comprises a base 15 and means 17 for attaching the base 15 to the tube sheet 1. The means 17 for attaching the base 15 to the tube sheet 1 comprises an elastomer sleeve 19 which is compressed axially by a pneumatic or hydraulic cylinder 21 to expand the elastomer sleeve 19 into radial engagement with a tube or tube hole. While only one such attaching means is shown, another such means is disposed diagonally opposite the one shown but cannot be seen in the drawing.

A carriage 23 is slidably disposed on the base 15 so as to move rectilinearly in Y direction and a stepping motor drive 25 rotates a screw (not shown), which engages a split nut (not shown) which can be made to engage and disengage the screw by moving a lever 27 disposed on the carriage allowing free or controlled movement of the carriage 23 in the Y direction depending on whether or not the split nut engages the screw. A linear encoder 29 is utilized to signal the Y position of the carriage 23.

Slidably disposed on the carriage 23 is a crossfeed frame 31 which is so disposed thereon to move rectilinearly in the X direction. A stepping motor drive 33 rotates a screw 35 which engages a split nut (not shown), which can be made to engage and disengage the screw 35 by moving the lever 37 allowing free or controlled movement of the cross-feed frame 31. A linear encoder 39 is utilized to signal the X position of the cross-feed frame at all times.

A torch and probe holder 41 is slidably disposed on the cross-feed 31 so as to move rectilinearly in the Z direction. By operating a lever 45 the torch and probe holder 41 may move freely in the Z direction or drive means 43 may move the torch or probe in the Z direction. An encoder 37 signals the Z position of the torch and probe holder 41 at all times. Control of the Z axis provides feedback for hole size during probing and voltage control during welding.

The torch and probe holder 41 is shown with a welding torch 49 disposed therein. The probe is similar to the torth in that it has a tapered or conical-shaped end which fits into the tubes.

Disposed on the cross-feed rack 31 is a switch 51 which is activated to send a signal when the probe is centered in a tube.

A welding machine 61 supplies power and shielding gas to the torch 49. The torch is preferably an inert gas tungsten arc torch.

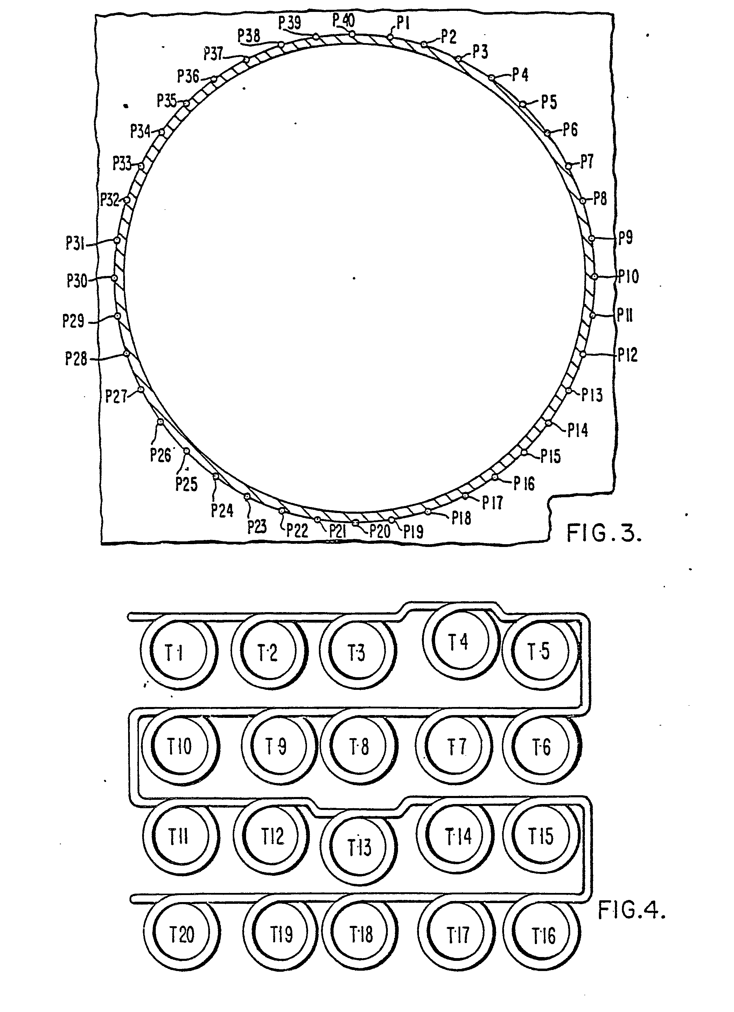

A controller 63, such as Texas Instrument Program Master 550, responds to the positions of the tubes and drives the step motors 25 and 33 to cause the welding torch to follow predetermined welding paths similar to those shown in Figures 3 through 5. An automatic voltage control moves the torch toward and away from the tube sheet to maintain a constant voltage on the arc utilizing the drive means 43. The controller can also respond to the depth that the probe fits into the tube to vary the path around the individual tubes to compensate for differences in diameter therebetween.

The method for continuously welding at least a portion of multiple rows of tubes to a tube sheet utilizing weld apparatus 13 which can automatically drive the welding torch 49 to any X and Y position encompassing a portion of multiple rows of tubes comprises the steps of:

expanding the tubes into holding engagement with the tube sheet;

attaching the welding apparatus 13 to the tube sheet 1 by inserting the elastomer sleeves 19 into tubes attached to the tube sheet and axially compressing the elastomer sleeves 19 into holding engagement with the tubes;

releasing the levers 27, 37, and 45 to disengage the automatic drives and replacing the torch 49 with a probe having a conical-shaped end;

placing the conical-shaped end or tip of the probe into each tube to be welding to the tube sheet;

sending a signal to the controller 63 when the probe is centered within a tube to be welded by depressing the switch 51;

recording the X, Y and Z positions of the probe upon receiving the signal that the probe is centered within a tube;

repeating the above two steps for each tube to be welded to the tube sheet;

remove the probe tip from the torch and replacing the probe with a shielding gas cup welding;

operating the levers 27, 37 and 45 to engage the automatic drives 25, 33 and 43, respectively.

automatically or manually bringing the torch to a predetermined starting position and initiating an arc between the torch and the tube sheet;

forming a continuous weld following a predetermined path which includes a predetermined number of locations P1 to P40 disposed about the periphery of each tube having its X and Y position recorded, the locations P1 to P40 need not be concentric with the center of the tubes and they need not be on a circular path, but may be on any path which produces the best weld characteristics (for example since the tube sheet is vertically disposed there is a slight tendency for the weld metal to sag downwardly due to the force of gravity and the weld puddle thus is intentionally moved upwardly slightly to compensate for the downward sagging).

The depth that the probe enters the tube sheet is an indication of the diameter of the hole and tube and can be utilized to change the diameter of the locations P1 to P40 as the torch goes to these various positions about each tube.

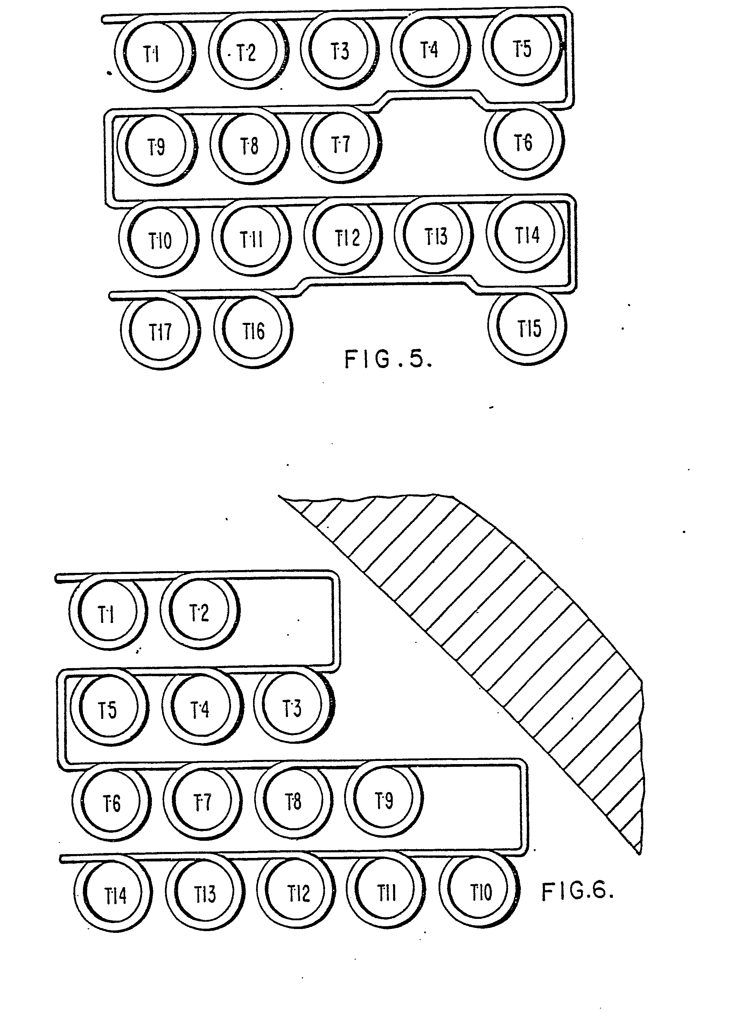

Since the exact X, Y positions of each tube to be welded is recorded the predetermined path includes the tubes T1 through T20 and can compensate for tubes having unusual pitch length as shown in Figure 4 where the tubes T4, T9 and T15 are irregularly spaced. As shown in Figure 5 the predetermined path may include irregular spaces where tubes are left out to provide for stay rods and blowdown piping as shown in Figure 5 between tubes T6 and T7 and between tubes T15 and T16. The predetermined path can also include row length adjustments necessitated by the location of the walls of the vessel as shown in Figure 6.

The welding sequence is automatically determined and does not necessarily follows the probing hole sequence, but rather the most efficient serpentine path of holes probed.

The continuous tube welding method and apparatus hereinbefore described is ideally suited for fusion welding, in particular where large numbers of tubes are available for welding and the reduced weld cycle time increases weld efficiency.

**Claims**

1. A method for welding at least a portion of multiple rows of tubes (5) to a tube sheet (1) utilizing apparatus (9, 11, 13, 63) which under the control of a recorded program can automatically drive welding means (49) to any predetermined X and Y position encompassing said portion of said multiple rows of tubes (5), a continuous weld being formed following a predetermined path which extends about the periphery of each tube (5) having its X and Y positions recorded to weld said tubes (5) to the tube sheet (1), characterized in that the welding means is a welding torch, and in that before welding, a tapered probe secured to said apparatus (9, 11, 13, 63) is placed into each tube (5) to be welded to the tube sheet (1) and the X and Y positions of each tube (5) are recorded, and that said probe is firmly pressed into the respective tubes (5) so as to be centered therein and that the depth of insertion of said tapered probe into said tubes (5) is also recorded and determined as an indication of the diameter of the tube (5), and that the welding path around a tube (5) is modified to compensate for variations in the tubes' (5) predetermined locations (P1 to P41) and diameters.

2. A method as claimed in claim 1, characterized in that, before welding, the tubes (5) to be welded are expanded into holding engagement with the tube sheet (1).

3. A method as claimed in claim 1 or 2, characterized in that, for forming the continuous weld, the welding torch (49) is moved to the center of the tube sheet area between adjacent rows of tubes (5) when the distance between adjacent rows is greater than the tube pitch.

**Patentansprüche**

1. Verfahren zum Einschweißen mindestens eines Teils von mehrreihigen Rohren (5) in einen Rohrboden (1) unter Verwendung einer Vorrichtung (9, 11, 13, 63), die unter der Steuerung eines aufgezeichneten Programms einen Schweißkopf (49) automatisch in jede beliebige vorgegebene X- und Y-Position im Bereich des genannten Teils der mehrreihigen Rohre (5) fahren kann, wobei eine kontinuierliche Schweißnaht entlang eines vorgegebenen Pfades gebildet wird, der um den Umfang jedes Rohres (5) herumverläuft, dessen X- and Y-Positionen aufgezeichnet sind, um die Rohre (5) in den Rohrboden (1) einzuschweißen, dadurch, gekennzeichnet, daß der Schweißkopf eine Schweißbrenner ist, und daß vor dem Schweißen eine an der Vorrichtung (9, 11, 13, 63) befestigte, sich verjüngende Sonde in jedes in den Rohrboden (1) einzuschweißende Rohr (5) eingeführt wird und die X- und Y-Positionen jedes Rohres (5) aufgezeichnet werden, und daß die genannte Sonde fest in die betreffenden Rohre (5) hineingedrückt wird, um sie darin zu zentrieren, und daß die Einführtiefe der sich verjüngenden Sonde in die Rohre (5) ebenfalls aufgezeichnet und als Maß für den Durchmesser des Rohres (5) bestimmt wird, und daß der Schweißpfag um ein Rohr (5) herum modifiziert wird, um Abweichungen der vorgegebenen Positionen (P1 bis P41) und Durch-

messer der Rohre (5) auszugleichen.

2. Verfahren nach Anspruch 1, dadurch gekennzeichnet, daß die Rohre (5) vor dem Schweißen in fixierende Anlage dem Rohrboden (1) aufgeweitet wird.

3. Verfahren nach Anspruch 1 oder 2, dadurch gekennzeichnet, daß zur Herstellung der kontinuierlichen Schweißnaht der Schweißbrenner (49) zur Mitte des Rohrbodenbereiches zwischen benachbarten Reihen von Rohren (5) bewegt wird, wenn der Abstand zwischen benachbarten Reihen größer als die Rohrteilung ist.

**Revendications**

1. Un procédé pour souder au moins une partie de rangées multiples de tubes (5) à une plaque tubulaire (1) en utilisant un appareil (9, 11, 13, 63) qui, sous la commande d'un programme enregistré, peut entraîner automatiquement un moyen de soudage (49) jusqu'à des positions prédéterminées X et Y entourant ladite partie desdites rangées multiples de tubes (5), une soudure continue étant formée suivant un trajet prédéterminé qui s'étend autour de la périphérie de chaque tube (5) dont les positions X et Y sont enregistrées pour souder lesdits tubes (5) à la plaque tubulaire (1), caractérisé par le fait que le moyen de soudage est un chalumeau, qu'avant le soudage, une sonde conique fixée audit appareil (9, 11, 13, 63) est introduite dans chaque tube (5) à souder à la plaque tubulaire (1) et les positions X et Y de chaque tube (5) sont enregistrées, que ladite sonde est fermement poussée dans les tubes respectifs (5) de manière à y être centrée et que la profondeur d'introduction de ladite sonde conique dans lesdits tubes (5) est également enregistrée et déterminée en tant qu'indication du diamètre du tube (5), et que le trajet de soudage autour d'un tube (5) est modifié pour compenser les variations se produisant dans les diamètres et les emplacements (P1 à P41) prédéterminés des tubes (5).

2. Un procédé selon la revendication 1, caractérisé par le fait que, avant le soudage, les tubes (5) à souder sont dilatés de manière à venir en contact de retenue avec la plaque tubulaire (1).

3. Un procédé selon la revendication 1 ou 2, caractérisé par le fait que, pour former la soudure continue, le chalumeau (49) est déplacé jusqu'au centre de la région de la plaque tubulaire comprise entre des rangées adjacentes de tubes (5) lorsque la distance entre les rangées adjacentes est supérieure au pas des tubes.

FIG.I.

FIG. 2.

FIG. 3.

FIG.4.

FIG.5.

FIG.6.